# EUROPÄISCHE PATENTSCHRIFT

(11) **EP 2 109 754 B1**
(45) Veröffentlichungstag und Bekanntmachung des Hinweises auf die Patenterteilung: **16.10.2013**
(21) Anmeldenummer: 08706738.5
(22) Anmeldetag: 14.01.2008
(51) Int. Cl.: G01B 11/275, B66F 7/28

(54) **VORRICHTUNG ZUM MESSEN DER FAHRWERKSGEOMETRIE**
DEVICE FOR THE MEASUREMENT OF UNDERCARRIAGE GEOMETRY
DISPOSITIF DE MESURE DE LA GÉOMÉTRIE D'UN TRAIN DE ROULEMENT

(30) Priorität: 16.01.2007 DE 102007003086
(43) Veröffentlichungstag der Anmeldung: 21.10.2009
(73) Patentinhaber: Dürr Assembly Products GmbH, 66346 Püttlingen (DE)
(72) Erfinder: TENTRUP, Thomas, 66663 Mechern (DE); DEUTSCH, Andre, F-67260 Herbitzheim (FR); KURT, Ismail, 66333 Völklingen (DE); HEINTZ, Christoph, 66117 Saarbrücken (DE)
(74) Vertreter: Wieske, Thilo
(86) Internationale Anmeldenummer: PCT/DE2008/000035
(87) Internationale Veröffentlichungsnummer: WO 2008/086773

(56) Entgegenhaltungen:
- EP-A- 0 816 801
- EP-A- 1 069 399
- EP-A1- 1 788 374
- WO-A-03/089867
- WO-A-2006/028166
- DE-B3- 10 332 817
- US-A- 4 745 469

## Beschreibung

Die Erfindung betrifft eine Vorrichtung zum Messen der Fahrwerksgeometrie von Fahrzeugen, insbesondere von Bussen und Lastkraftwagen, wobei die Vorrichtung in Richtung der Fahrzeuglängsachse mindestens vier in Richtung der Fahrzeuglängsachse translatorisch verstellbare Radaufnahmemittel aufweist, die als endlose Bänder ausgebildet sind, wobei die Vorder- bzw. Hinterräder des Kraftfahrzeuges auf die Radaufnahmemittel aufsetzbar sind und die Radaufnahmemittel in einer horizontalen Ebene angeordnet sind, und wobei Meßsysteme vorhanden sind

Aus der EP 0 594 163 B 1 ist eine Einrichtung zur Vermessung der Achsgeometrie an den Radachsen von Kraftfahrzeugen bei drehenden Rädern bekannt, die mindestens zwei im Abstand der Spurweite des Kraftfahrzeuges angeordnete antreibbare Aggregate aufweist, wobei die Vorder- bzw. Hinterräder des Kraftfahrzeuges auf die Aggregate aufsetzbar sind und jedes Aggregat in einer horizontalen Ebene gegenüber einem Grundgestell angeordnet ist, wobei als Aggregate zur Aufnahme der Räder mindestens einer Achse antreibbare, endlose, als Fördergurt ausgebildete Bänder sowie Meßsystemevorhanden sind. Hierbei ist ein jedes Band abstützender Grundkörper vorhanden, der sich auf einer Grundplatte abstützt, wobei schließbare Zentriervorrichtungen zum Definieren von Freiheitsgraden des Grundkörpers bezüglich der Grundplatte vorhanden sind.

Für Lastkraftwagen (Lkws) und Busse sind aufgrund des großen Gewichtes und der variierenden Achsanzahl sowie Spurweite Vorrichtungen zum Messen der Fahrwerksgeometrie verwendet, mit denen Messungen bei drehenden Rädern nicht möglich sind. Existierende Vorrichtungen zum Messen der Fahrwerksgeometrie von Lkws und Bussen sind sehr kostenaufwendig und haben sich daher auf dem Markt nicht durchgesetzt. Allerdings sind Messungen der Fahrwerksgeometrie bei stehenden Rädern aufgrund des Schlages des Rades und der Reifenbeschriftung unpräzise und werden heutigen Anforderungen hinsichtlich der Meßpräzision schon insofern nicht mehr gerecht.

Aus der DE 103 32 817 B3 ist ein Fahrzeugprüfstand zur Ermittlung der Kenndaten von Rad- und Achssystemen für die Definition und die Ermittlung von Fahreigenschaften und des technischen Zustandes eines mit bereiften Rädern bestückten Fahrzeugs. Das Fahrzeug wird in einer beliebigen Lage festgehalten und es ist an mindestens einer Achse ortsgefesselt. Jedes der Räder wird auf einer diesem zugeordneten Unterlage abgestützt, die eine unbegrenzte Linearbewegung in einer ersten Richtung und eine begrenzte Linearbewegung in einer zu der ersten Richtung rechtwinkligen Richtung ausführen kann. Jedes der Räder wird auf einer diesem zugeordneten Unterlage abgestützt, die eine unbegrenzte Linearbewegung in einer ersten Richtung und eine begrenzte Linearbewegung in einer zu der ersten Richtung rechtwinkligen zweiten Richtung ausführen kann. Die Räder werden angetrieben und die Koordinaten der Radaufstandspunkte auf jeder Unterlage werden ermittelt.

Aus der US 6,209,209 B 1 ist es bekannt, Fehler bei der Spurmessung dadurch zu eliminieren, daß eine erste Reihe von Spurmessungen durchgeführt wird, wobei das Fahrzeug in einer ersten Position angeordnet ist, in der alle lateralen Kräfte aufgehoben sind, während das Fahrzeug auf den Rädern steht und eine zweite Reihe von Spurmessungen durchgeführt wird, wobei das Fahrzeug in einer zweiten Position angeordnet ist, in der alle lateralen Kräfte aufgehoben sind, während das Fahrzeug auf den Rädern steht.

Aus der EP 1 069 399 A2 und WO 2006/028166 A1 ist eine Spureinstellungs-Justiervorrichtung bekannt, umfassend eine Einheit, die eine Rad-Drehvorrichtung beinhaltet, die ein Rad eines auf der Spureinstellungs-Justiervorrichtung abgesetzten Kraftfahrzeuges dreht.

Die WO 03/089876 A1 betrifft eine Vorrichtung zum Messen von Ausrichtungseigenschaften eines Fahrzeugrades/-reifens mit einem Visionssensor, der ein Gesichtsfeld besitzt und räumliche Koordinaten einer Gruppe von Pixeln innerhalb des Gesichtsfeldes bestimmen kann, Einrichtungen zum Drehen des Visionssensors und einem Computer, der aus der Sammlung räumlicher Koordinaten eine Radausrichtungseigenschaft des Rades/Reifens berechnet.

Aufgabe der Erfindung ist es somit, eine Vorrichtung zum Messen der Fahrwerksgeometrie insbesondere von Bussen und Lastkraftwagen zu schaffen, die eine kostengünstige, schnelle und präzise Messung der Fahrwerksgeometrie ermöglicht. Diese Aufgabe wird durch eine Vorrichtung mit den Merkmalen des unabhängigen Anspruchs 1 gelöst.

Diese Aufgabe wird erfindungsgemäß dadurch gelöst, daß die translatorisch verstellbaren Radaufnahmemittel als endlose Bänder ausgebildet sind, wobei auf jedem Band mindestens ein Drehteller zur Radaufnahme angeordnet ist, der über die Bewegung des Bandes an dessen Oberseite translatorisch bewegbar ist und als Meßsysteme seitlich der Radaufnahmemittel angeordnete berührungslose Meßeinheiten vorgesehen sind.

Über die endlosen Bänder werden die Räder des Fahrzeuges nicht angetrieben, sondern lediglich Teildrehungen der Räder bzw. - bei Vorliegen einer individuellen Verstellbarkeit der Bänder - eines einzelnen Rades bis hin zu einer Radumdrehung durchgeführt. Die lenkbaren Räder der Vorderachse(n) und ggf. der Hinterachse(n) werden auf die Drehteller auf den endlosen Bändern gestellt (wobei durch die Bänder die Drehteller auf den jeweiligen Radstand des Fahrzeuges eingestellt werden können) und die nicht lenkbaren bzw. einstellbaren Räder direkt auf die Bänder. Die Drehteller werden beim Lenken bzw. bei der Einstellung durch das sich drehende Rad gedreht und besitzen zusätzlich zwei translatorische Freiheitsgrade in der horizontalen Ebene.

Durch die translatorische Verstellbarkeit der Radaufnahmemittel in Richtung der Fahrzeuglängsachse wird ein Rad bzw. mehrere Räder auf dem Radaufnahmemittel eine halbe Umdrehung nach rechts und eine halbe Umdrehung nach links um seine Achse gedreht, wodurch eine ganze Radumdrehung meßtechnisch erfaßt werden kann, was einer Messung am drehenden Rad entspricht. Dies bedeutet gegenüber Messungen lediglich bei stehenden Rädern einen deutlichen Präzisionsgewinn.

Eine Weiterbildung der Erfindung besteht darin, daß die Drehteller Drehwinkelgeber aufweisen.

Über die Drehwinkelgeber der Drehteller kann der resultierende Drehwinkel ermittelt werden.

Eine Ausbildung der Erfindung besteht darin, daß die Bänder Stahlplattenbänder, Kunststoffbänder oder Gummibänder sind.

Diese können die beim Messen der Fahrwerksgeometrie von Lkws und Bussen auftretenden Traglasten von mindestens 5 t pro Rad aufnehmen.

Weiterhin ist es zur Erfindung gehörig, daß die Bänder mit Antrieben versehen sind.

Dies ermöglicht ein automatisches Verstellen der Bänder. Wenn jedes der Bänder einen eigenen Antrieb aufweist, können die Bänder auch einzeln verfahren werden, was es ermöglicht, Messungen an einem einzelnen Rad vorzunehmen.

Weiterhin kann vorgesehen sein, daß die Radaufnahmemittel auch quer zur Fahrzeuglängsachse verschiebbar sind.

Dies ermöglicht ein Anpassen der Vorrichtung an verschiedene Spurbreiten.

Es liegt im Rahmen der Erfindung, daß als Meßsysteme seitlich der Radaufnabmemittel angeordnete berührungslose Meßeinheiten, z.B. Lasermeßeinheiten vorgesehen sind.

Hierbei ist es zweckmäßig, daß mindestens ein Paar Lasermeßeinheiten in Fahrzeuglängsachse verschiebbar sind.

Dies ermöglicht ein Positionieren der Lasermeßeinheiten in dem für die Messung interessanten Bereich.

Nachfolgend werden zwei Ausführungsbeispiele der Erfindung anhand einer Zeichnung beschrieben.

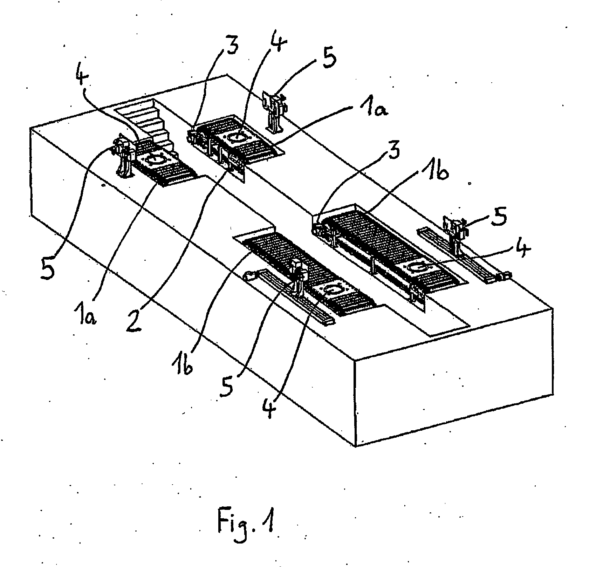

Es zeigen
- Fig. 1: eine erfindungsgemäße Vorrichtung mit Bändern als Radaufnahmemittel.

Wie aus Fig. 1 ersichtlich, weist die Vorrichtung vier Radaufnahmemittel 1 auf, wobei zwei Radaufnahmemittel 1a der Vorderachse und zwei Radaufnahmemittel 1b der Hinterachse des Fahrzeugs zugeordnet sind. Bei Fahrzeugen mit zwei gelenkten Vorderachsen würden entsprechend zwei weitere Radaufnahmemittel 1a für die weitere gelenkte Vorderachse vorgesehen. Die Radaufnahmemittel 1 sind auch quer zur Fahrzeuglängsachse verstellbar, um eine Einstellung auf verschiedene Spurbreiten zu ermöglichen.

Die Radaufnahmemittel 1 sind in Fig. 1 als Stahlplattenbänder ausgebildet, die in einem Traggerüst 2 drehbar angeordnet und mit Antrieben 3 versehen sind. Da jedes Band 1 einen eigenen Antrieb aufweist, können die Bänder 1 - und somit auch die auf verschiedenen Bändern angeordneten Räder des Fahrzeuges - einzeln gedreht werden.

Auf jedem der Bänder 1 ist ein Drehteller 4 angeordnet, der die eigentliche Radaufuahme für die gelenkten Räder des Fahrzeuges darstellt. Aufgrund der Anordnung der Drehteller 4 auf den drehbaren Bändern 1 können die Drehteller 4 entsprechend dem jeweiligen Radstand des zu messenden Fahrzeuges positioniert werden.

Die Drehteller 4 weisen Drehwinkelgeber auf, über die der Drehwinkel eines jeden lenkbaren Rades des Fahrzeuges ermittelbar ist.

Seitlich neben den Radaufnahmemitteln 1 sind als berührungslose Meßsysteme Lasermeßeinheiten 5 angeordnet, von denen die hinteren in Fahrzeuglängsachse verschiebbar sind. Hierdurch können die Lasermeßeinheiten der jeweiligen Fahrzeugkonstellation angepaßt werden.

Aufgrund der erfindungsgemäßen Ausgestaltung der Radaufnahmemittel 1 kann jedes Rad durch Drehen der Bänder 1 um eine halbe Radumdrehung (180°) nach links und nach rechts gedreht werden. Dies erfolgt beispielsweise mit einer Geschwindigkeit von 0,2 m/s. Eine derartige Umschlagmessung ermöglicht es, Unregelinäßigkeiten des Rades, wie den Reifenwulst und die Reifenbeschriftung, bei den Messungen zu berücksichtigen.

Die Fahrwerksgeometriemessung kann wie folgt ablaufen:

Die Radaufnahmemittel 1 werden entsprechend dem zu messenden Fahrzeug eingestellt und das Fahrzeug auf diesen so positioniert, daß die lenkbaren Räder auf einem Drehteller 4 und die nicht lenkbaren Räder auf den Radaufhahmitteln 1 zu stehen kommen.

Anschließend erfolgt eine Messung am drehenden Rad, wobei eine Radumdrehung durch translatorisches Bewegen der Radaufnahmemittel 1 in Richtung der Fahrzeuglängsachse wie folgt dargestellt wird: Das Rad wird zunächst um 180° nach links gedreht, danach 360° nach rechts und dann wieder um 180° nach links, wobei es in die ursprüngliche Position zurückkehrt. Hierbei kann sowohl eine Schlagmessung des Rades als auch eine "Glättung" (Elimination der durch die Reifenbeschriftung hervorgerufenen Effekte) erfolgen. Da jedes Radaufnahmemittel 1 einzeln translatorisch verstellbar ist, kann je nach Bedarf entschieden werden, in welcher Reihenfolge die Radaufnahmemittel 1 bewegt werden und damit in welcher Richtung das/die sich in diesem Radaufnahmemitteil 1 befindliche Rad bzw. Räder gedreht wird/werden.

Die geleakte(n) Vorderachse(n) und ggf. eine gelenkte Hinterachse werden dann eingestellt, wobei die Einstellung der Vorderräder nach der Laufrichtung der Hinterräder erfolgen sollte. Weiterhin werden bei allen gelenkten Achsen Nachlauf und Spreizung gemessen, was über die Drehwinkelgeber der Drehteller 4 sowie eine Spreizungsmeßplatte erfolgt.

Es kann ein Einrichtmeister vorgesehen sein, mit dem die Vorrichtung kalibriert wird und der Vorsprünge aufweist, die in Bohrungen bzw. in Pins der Vorrichtung eingreifen.

## Patentansprüche

1. Vorrichtung zum Messen der Fahrwerksgeometrie von Fahrzeugen, insbesondere von Bussen und Lastkraftwagen, wobei die Vorrichtung in Richtung der Fahrzeuglängsachse mindestens vier in Richtung der Fahrzeuglängsachse translatorisch verstellbare Radaufnahmemittel aufweist, die als endlose Bänder (1) ausgebildet sind, wobei die Vorder- bzw. Hinterräder des Kraftfahrzeuges auf die Radaufnahmemittel aufsetzbar sind und die Radaufnahmemittel in einer horizontalen Ebene angeordnet sind, und wobei Meßsysteme vorhanden sind, wobei auf jedem Band (1) mindestens ein Drehteller (4) zur Radaufnahme angeordnet ist, der über die Bewegung des Bandes (1) an dessen Oberseite translatorisch bewegbar ist und als Meßsysteme seitlich der Radaufnahmemittel angeordnete berührungslose Meßeinheiten (5) vorgesehen sind.

2. Vorrichtung gemäß Anspruch 1, wobei die Drehteller (4) Drehwinkelgeber aufweisen.

3. Vorrichtung gemäß Anspruch 1, wobei die Bänder (1) Stahlplattenbänder, Kunststoffbänder oder Gummibänder sind.

4. Vorrichtung gemäß Anspruch 1, wobei die Bänder (1) mit Antrieben (3) versehen sind.

5. Vorrichtung gemäß Anspruch 1, wobei die Radaufnahmemittel (1) auch quer zur Fahrzeuglängsachse verschiebbar sind.

6. Vorrichtung gemäß Anspruch 1, wobei als Meßsysteme seitlich der Radaufnahmemittel (1) angeordnete berührungslose Lasermeßeinheiten (5) vorgesehen sind.

7. Vorrichtung gemäß Anspruch 6, wobei mindestens ein Paar Lasermeßeinheiten (1) in Richtung der Fahrzeuglängsachse verschiebbar sind.

## Claims

1. A device for the measurement of the undercarriage geometry of vehicles, in particular of busses and trucks, the device having at least four wheel receiving means in the direction of the longitudinal axis of the vehicle which can be translationally displaced in the direction of the longitudinal axis of the vehicle which are constructed as endless belts (1), wherein the front and/or rear wheels of the motor vehicle can be positioned on the wheel receiving means, and the wheel receiving means are arranged in a horizontal plane, and wherein measuring systems are present, wherein at least one rotary disk (4) for receiving wheels is arranged on each belt (1), wherein the rotary disk can be translationally moved through the movement of the belt (1) on its upper side and wherein non-contact measuring units that are arranged lateral to the wheel receiving means are provided as contactless measuring systems.

2. A device according to Claim 1, wherein the rotary disks (4) comprise rotary incremental encoders.

3. A device according to Claim 1, wherein the belts (1) are steel plate belts, non-metallic straps or rubber bands.

4. A device according to Claim 1, wherein the belts (1) comprise drivers (3).

5. A device according to Claim 1 wherein the wheel receiving means can also be displaced across the longitudinal axis of the vehicle.

6. A device according to Claim 1, wherein non-contact laser-measuring units (5) that are arranged lateral to the wheel receiving means are provided as measuring systems.

7. A device according to Claim 6, wherein at least one pair of laser-measuring units (5) can be displaced in direction of the longitudinal axis of the vehicle.

## Revendications

1. Dispositif pour mesurer la géométrie d'un train de roulement, notamment de cars et de camions, le dispositif étant muni dans la direction de l'axe longitudinal du véhicule d'au moins quatre moyens de réception de roue pouvant être réglés en translation dans la direction de l'axe longitudinal du véhicule, lesdits moyens étant conçus comme des bandes sans fin (1), les roues avant et arrières du véhicule respectivement pouvant être posées sur les moyens de réception de roue et les moyens de réception de roue étant disposés dans un plan horizontal, et des systèmes de mesure étant prévus, un plateau tournant (4) au moins étant disposé sur chaque bande (1) pour servir de réception de roue et pouvant être déplacé en translation sur la face supérieure de la bande (1) suite au déplacement de cette dernière (1), et des unités de mesure sans contact (5) étant disposées à côté des moyens de réception de roue pour servir de systèmes de mesure.

2. Dispositif selon la revendication 1, dans lequel les plateaux tournants (4) sont munis de capteurs d'angle de rotation.

3. Dispositif selon la revendication 1, dans lequel les bandes sont des bandes à tablier métallique, des bandes en matière plastique ou des bandes en caoutchouc.

4. Dispositif selon la revendication 1, dans lequel les bandes (1) sont munies d'un entraînement (3).

5. Dispositif selon la revendication 1, dans lequel les moyens de réception de roue (1) peuvent être déplacés également transversalement à l'axe longitudinal du véhicule.

6. Dispositif selon la revendication 1, dans lequel des unités de mesure par laser sans contact (5) sont prévues disposées sur le côté des moyens de réception de roue (2) comme systèmes de mesure.

7. Dispositif selon la revendication 6, dans lequel au moins une paire d'unités de mesure par laser (5) peut être déplacée en direction de l'axe longitudinal du véhicule.
